# EUROPÄISCHE PATENTSCHRIFT

(11) **EP 0 601 268 B1**
(45) Veröffentlichungstag und Bekanntmachung des Hinweises auf die Patenterteilung: **04.12.1996**
(21) Anmeldenummer: 93107838.0
(22) Anmeldetag: 13.05.1993
(51) Int. Cl.: H01M 2/06, H01M 2/30

(54) **Anschlusspol für einen Akkumulator**
Terminal for accumulator
Borne terminale pour accumulateur

(30) Priorität: 09.12.1992 DE 4241393
(43) Veröffentlichungstag der Anmeldung: 15.06.1994
(73) Patentinhaber: HOFMANN WERKSTATT-TECHNIK GMBH, D-64319 Pfungstadt (DE)
(72) Erfinder: Heller, Karl-Heinz, W-7457 Bisingen (DE)
(74) Vertreter: Nöth, Heinz, Dipl.-Phys.

(56) Entgegenhaltungen:
- DE-A- 1 953 414
- DE-A- 4 127 956
- DE-B- 1 671 999
- DE-B- 2 721 512
- US-A- 1 411 414
- US-A- 3 064 068
- PATENT ABSTRACTS OF JAPAN vol. 6, no. 42 (E-98)(920) 16. März 1982 & JP-A-56 159 054 (FURUKAWA DENCHI K.K.) 8. Dezember 1981

## Beschreibung

Die Erfindung betrifft einen Anschlußpol für einen Akkumulator mit einem Anschlußteil, an welches ein Verbraucher anschließbar ist, und mit einem Sockelteil mit umlaufenden Rillen, das in ein Gehäuse des Akkumulators einsetzbar ist, wobei die umlaufenden Rillen mit einem die Rillen ausfüllenden Kuststoff eine Labyrinthdichtung bilden.

Derartige Anschlußpole sind aus DE-B-1 671 999 und DE-A-1 953 414 bekannt und werden in aller Regel im Gehäuse oder Deckel von Akkumulatoren, welche beispielsweise als Starterbatterien für Karftfahrzeuge verwendet werden, flüssigkeits- und gasdicht eingesetzt. Zwischen dem Anschlußpol, d.h. zwischen dem eingesetzten Sockelteil und dem Akkumulatorgehäuse oder Deckel dürfen weder Gase noch flüssiger Elektrolyt austreten. Hierzu ist es bekannt, im Sockelteil, das in das Batteriegehäuse oder in den Batteriedeckel eingesetzt wird, umlaufende Rillen einzuformen, die mit dem die Rillen ausfüllenden Kunststoff eine Labyrinthdichtung bilden.

Aufgabe der Erfindung ist es, einen Anschlußpol der eingangs genannten Art zu schaffen, der eine verbesserte Labyrinthdichtung aufweist, die sich durch eine Dichtigkeit auszeichnet, die den Austritt von Elektrolyt oder Gas aus dem Akkumulatorinneren wirksam verhindert.

Diese Aufgabe wird erfindungsgemäß dadurch gelöst, daß mindestens eine umlaufende Rille mit hakenförmigem Profil ausgebildet ist, das eine widerhakenförmige Hinterschneidung aufweist.

An diesem derart ausgebildetem Profilbereich des Sockelteils entwickelt sich beim Schrumpfen des den Sockelteil umgebenden Kunststoffes zwischen Kunststoff und Polhülse eine starke Keil- und damit zusätzliche Labyrinthdichtungswirkung mit unterschiedlicher Dichtungswirkung der Schrumpfkräfte auf die beaufschlagten Profilflächen, wodurch über die Flächenpressung der Kunststoff absolut flüssigkeits- und gasdicht mit der Polhülse bzw. mit deren Sockelteil verbunden wird. Da Hand in Hand mit der hakenförmigen Gestaltung der Rillenprofile eine Vergrößerung der Dichtfläche einhergeht, trägt auch diese zu einer verbesserten Dichtigkeit zwischen der Polhülse und dem Akkumulatorgehäuse bzw. dessen Deckel bei.

Eine weiter verbesserte Labyrinthdichtungswirkung läßt sich erzielen, wenn zusätzlich das Profil des unteren umlaufenden Kantenbereichs des Sockelteils keilförmig ausgebildet ist.

Durch die im Profil konische Form der im unteren Kantenbereich des Sockelteils gewonnen zusätzlichen Labyrinthringe, an welchen der Kunststoff unbeeinflußt schrumpfen kann, entsteht so gleichfalls eine sehr starke Flächenpressung zwischen dem Metall, insbesondere Blei, des Sockelteils und dem Kunststoff. Ferner gewinnt man auch an dieser Stelle eine Vergrößerung der Dichtfläche und damit eine weiter verbesserte Dichtigkeit des in das Gehäuse oder den Gehäusedeckel des Akkumulators eingesetzen Anschlußpols.

Falls dies noch für erforderlich erachtet werden sollte, kann im übrigen bevorzugt in den, an den Kantenbereich anschließenden Mantelbereich des Sockelteils eine weitere nicht mit einem hakenförmigen Profil ausgezeichnete Rille mit zwei, im Querschnitt etwa konisch geformten umlaufenden Vorsprüngen vorgesehen sein, zwischen denen eine im Profil v-förmige Rille gebildet ist. Auch hierdurch wird noch eine zusätzliche Labyrinthdichtung erreicht.

Die Erfindung wird nachstehend anhand der Figuren noch näher erläutert. Es zeigt:
- Fig. 1: in teils geschnittener und gebrochener Darstellung ein erstes Ausführungsbeispiel des Gegenstandes nach der Erfindung;
- Fig. 2: eine vergrößerte Ansicht des Detailausschnitts A in Fig. 1;
- Fig. 3, 4: in der Darstellung in der Fig. 1, 2 ein zweites Ausführungsbeispiel des Gegenstandes nach der Erfindung, wobei an die Stelle des Detailausschnittes A der Detailausschnitt B tritt.

Gleiche Elemente sind dabei mit gleichen Bezugszeichen bezeichnet.

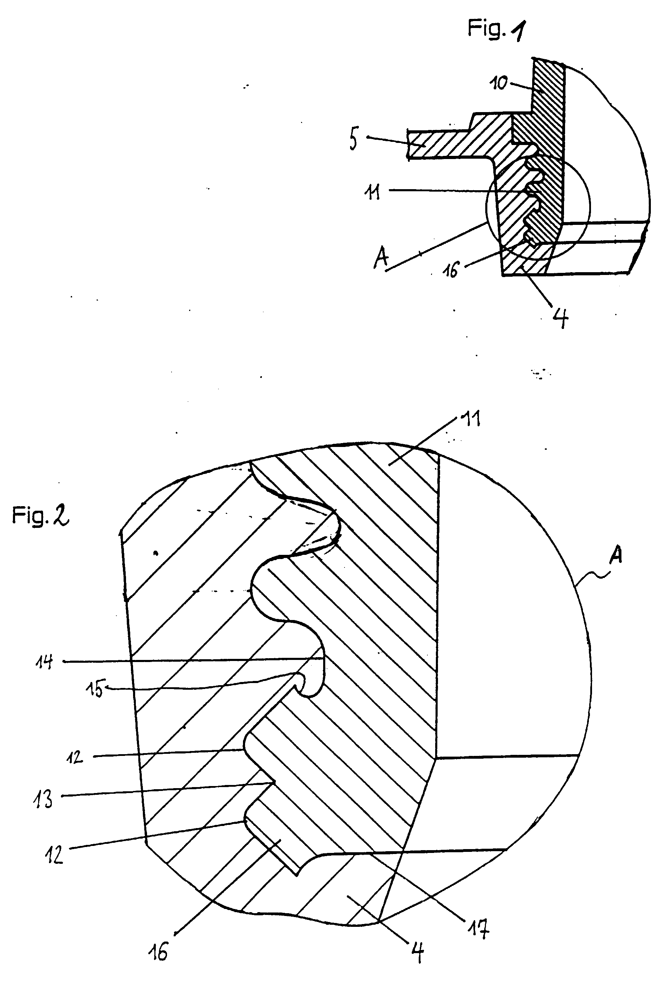

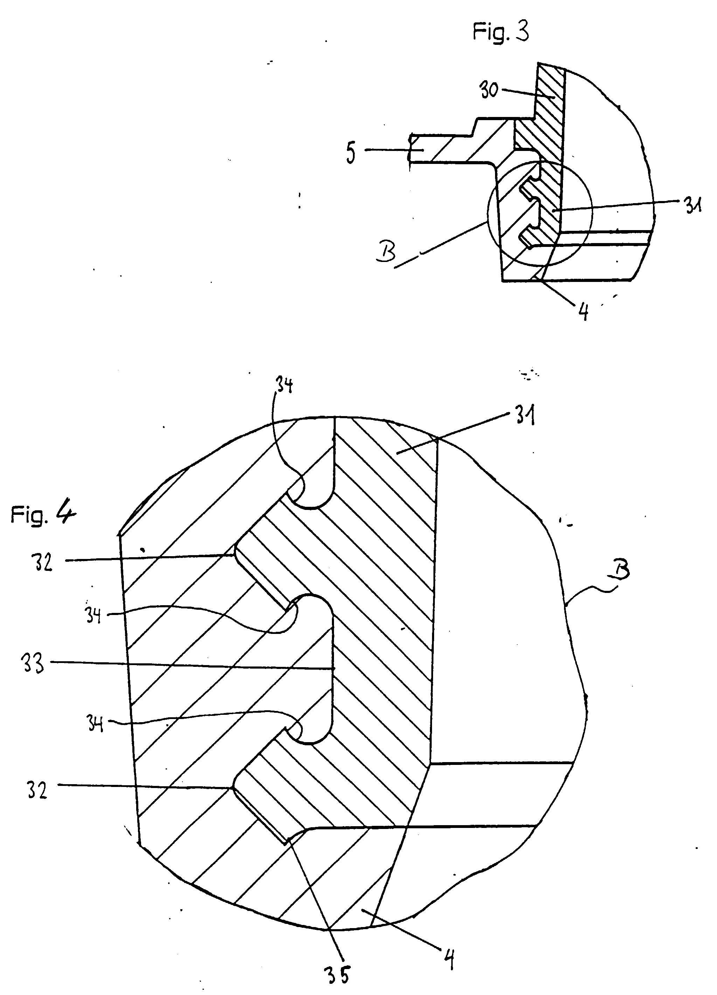

Im in Fig. 1, 2 gezeigten Ausführungsbeispiel weist der Mantelbereich eines an einen Anschlußteil 10 anschließenden Sockelteils 11 eine umlaufende Rille 14 mit widerhakenförmiger Hinterschneidung 15 auf, durch die eine hohe Keilwirkung und Vergrößerung der Dichtfläche erzielbar ist.

Darüberhinaus ist der untere umlaufende Kantenbereich 16 - siehe insbesondere Fig. 2, Detailausschnitt A - so ausgebildet, daß in diesem Bereich eine zusätzliche noch verbesserte Labyrinthdichtung gebildet wird. Hierzu ist der untere umlaufende Kantenbereich 16 des Sockelteils 11 mit einem keilförmigen bzw. konusförmigen Profil ausgestattet. Der keilförmige umlaufende Kantenbereich 16 kann dabei als abgebördelte Kante ausgebildet sein. Ein so beschaffener Kantenbereich nutzt in vorteilhafter Weise aus, daß das Kunststoffmaterial 4 im unteren Bereich des Sockelteils 11, d.h. im keilförmig ausgebildeten Kantenbereich 16 und im sich anschließenden Mantelbereich unbeeinflußt vom übrigen Deckelmaterial, von welchem in Fig. 1 ein horizontal verlaufendes Deckelteil 5 gezeigt ist, aufschrumpfen kann. Man erreicht hier eine starke Flächenpressung zwischen dem Metall insbesondere Blei des Anschlußpols und dem Kunststoffmaterial 4. Die in diesem Bereich auftretende Keilwirkung zwischen Kunststoff und Polkörpermaterial führt zu einer konischen Abdichtung, welche ein Austreten von Gas und Elektrolytflüssigkeit zwischen dem Kunststoffmaterial und dem Polkörpermaterial verhindert. Wenn Elektrolytflüssigkeit sich entlang der ebenen Fläche 17 an der Stirnseite des Sockelteils 11 (Fig. 2) bewegt und diese Flüssigkeit in den Bereich des keilförmig in das Kunststoffmaterial ragenden Kantenbereichs 16 kommt, wird im benachbarten Kunststoffmaterial und auch in dem relativ weichen Material (Blei) des Polkörpers ein zusätzlicher Druck aufgebaut, welcher zu einer erhöhten Flächenpressung zwischen dem Kunststoffmaterial und dem Polkörpermaterial führt, sodaß ein weiteres Vordringen der Elektrolytflüssigkeit zwischen dem Kunststoffmaterial und dem Polkörpermaterial wirkungsvoll verhindert wird. Mithin wird durch die Keilform des Kantenbereichs 16 nicht nur eine Vergrößerung der Dichtfläche, sondern durch die Elektrolytflüssigkeit, welche das Bestreben hat auszutreten, eine zusätzliche Flächenpressung in dem keilförmigen Kantenbereich erzeugt, die das Austreten der Elektrolytflüssigkeit verhindert.

Die Wirkung der Labyrinthdichtung läßt sich gegebenenfalls nochmals verstärken, wenn sich an den Kantenbereich 16 ein Mantelbereich des Sockelteils 11 anschließt, der im Querschnitt zwei konisch geformte umlaufende Vorsprünge 12 aufweist, zwischen denen eine etwa v-förmige Rille 13, die in ihrem Rillengrung spitz zuläuft gebildet wird, auf die bzw. in die das Kunststoffmaterial ebenfalls unbeeinflußt eingeschrumpft ist.

Fig. 3, 4 zeigen ein weiteres Ausführungsbeispiel des Gegenstandes nach der Erfindung, bei dem ein Mantelteil 31 der Polhülse, deren Anschlußteil mit 30 bezeichnet ist, gleichfall eine ringförmig umlaufende Rille 33 aufweist,die - betrachtet im Querschnitt - durch Vorsprünge 32, 32 mit widerhakenförmigen Hinterschneidungen 34, 34 begrenzt ist. Der zur Stirnseite des Mantelteils 31 gekehrte untere umlaufende Kantenbereich 35 des Vorsprungs 32 schafft wiederum eine zusätzliche Labyrinthdichtung.

Die Erfindung ist insbesondere von Vorteil bei geschlossenen Akkumulatoren, die als Starterbatterien für Kraftfahrzeuge Verwendung finden und bei denen in Gehäuseinneren ein leichter Überdruck aufrecht erhalten wird.

## Patentansprüche

1. Anschlußpol für einen Akkumulator mit einem Anschlußteil, an welches ein Verbraucher anschließbar ist, und mit einem Sockelteil mit umlaufenden Rillen, das in ein Gehäuse des Akkumulators einsetzbar ist, wobei die umlaufenden Rillen mit einem die Rillen ausfüllenden Kunststoff eine Labyrinthdichtung bilden,
dadurch **gekennzeichnet,**
daß mindestens eine umlaufende Rille (14; 33) mit hakenförmigem Profil ausgebildet ist, das eine widerhakenförmige Hinterschneidung (15; 34) aufweist.

2. Anschlußpol nach Anspruch 1, dadurch gekennzeichnet, daß mindestens eine weitere umlaufende Rille mit zwei im Querschnitt etwa konisch geformten umlaufenden Vorsprüngen (12,12) vorgesehen ist.

3. Anschlußpol nach Anspruch 2, dadurch gekennzeichnet, daß zwischen den beiden konischen Vorsprüngen (12,12) eine im Profil etwa v-förmige Rille (13) gebildet ist.

4. Anschlußpol nach Anspruch 1, dadurch gekennzeichnet, daß das Profil des unteren umlaufenden Kantenbereichs (16; 23; 35) des Sockelteils (11; 21; 31) keilförmig ausgebildet ist.

5. Anschlußpol nach Anspruch 4, dadurch gekennzeichnet, daß der keilförmige umlaufende Kantenbereich (16; 23; 35) als abgebördelte Kante ausgebildet ist.

6. Anschlußpol nach einem der Ansprüche 1 bis 5, dadurch gekennzeichnet, daß das Sockelteil (2; 11; 21) mit aufgeschrumpftem Kunststoff (4) umhüllt ist.

7. Anschlußpol nach einem der Ansprüche 1 bis 6, dadurch gekennzeichnet, daß der aufgeschrumpfte Kunststoff (4) ein thermoplastisches Polymerisat, z.B. Polypropylen ist.

8. Anschlußpol nach einem der Ansprüche 1 bis 6, dadurch gekennzeichnet, daß der aufgeschrumpfte Kunststoff (4) ein duroplastisches Material ist.

9. Anschlußpol nach einem der Ansprüche 1 bis 8, dadurch gekennzeichnet, daß der aufgeschrumpfte Kunststoff (4) das Kunststoffmaterial des Gehäusedeckels (5) des Akkumulatorgehäuses ist.

10. Anschlußpol nach einem der Ansprüche 1 bis 8, dadurch gekennzeichnet, daß der aufgeschrumpfte Kunststoff (4) das Kunststoffmaterial des Akkumulatorgehäuses ist.

11. Anschlußpol nach einem der Ansprüche 1 und 4 bis 10, dadurch gekennzeichnet, daß der keilförmig ausgebildete Kantenbereich (16; 23; 35) als gegenüber einer ebenen Fläche an der Unterseite des Sockelteils (11; 21; 31) in das umgebene Kunststoffmaterial (4) ragender, umlaufender, keilförmiger Vorsprung ausgebildet ist.

12. Anschlußpol nach einem der Ansprüche 1 bis 11, dadurch gekennzeichnet, daß der metallische Polkörper, bestehend aus dem Anschlußteil (1; 10; 20; 30) und dem Sockelteil (2; 11; 21; 31), Hülsenform aufweist.

## Claims

1. A terminal for an accumulator comprising a connecting portion to which a consumer can be connected, and a base portion with peripherally extending grooves, which base portion can be fitted into a casing of the accumulator, the peripherally extending grooves forming a labyrinth seal with a plastics material filling the grooves, characterised in that at least one peripherally extending groove (14; 33) is formed with a hook-shaped profile which has a barb-shaped undercut configuration (15; 34).

2. A terminal according to claim 1 characterised in that at least one further peripherally extending groove is provided with two peripherally extending projections (12, 12) which are approximately conically shaped in cross-section.

3. A terminal according to claim 2 characterised in that a groove (13) of approximately V-shape in profile is formed between the two conical projections (12, 12).

4. A terminal according to claim 1 characterised in that the profile of the lower peripherally extending edge region (16; 23; 35) of the base portion (11; 21; 31) is wedge-shaped.

5. A terminal according to claim 4 characterised in that the wedge-shaped peripherally extending edge region (16; 23; 35) is in the form of a flanged-over edge.

6. A terminal according to one of claims 1 to 5 characterised in that the base portion (2; 11; 21) is encased with plastics material (4) which is shrunk thereon.

7. A terminal according to one of claims 1 to 6 characterised in that the shrunk-on plastics material (4) is a thermoplastic polymer, for example polypropylene.

8. A terminal according to one of claims 1 to 6 characterised in that the shrunk-on plastics material (4) is a thermosetting material.

9. A terminal according to one of claims 1 to 8 characterised in that the shrunk-on plastics material (4) is the plastics material of the casing cover (5) of the accumulator casing.

10. A terminal according to one of claims 1 to 8 characterised in that the shrunk-on plastics material (4) is the plastics material of the accumulator casing.

11. A terminal according to one of claims 1 and 4 to 10 characterised in that the edge region (16; 23; 35) which is of a wedge-shaped configuration is in the form of a peripherally extending wedge-shaped projection which projects relative to a flat surface at the underside of the base portion (11; 21; 31) into the surrounding plastics material (4).

12. A terminal according to one of claims 1 to 11 characterised in that the metal terminal body comprising the connecting portion (1; 10; 20; 30) and the base portion (2; 11; 21; 31) is of a sleeve shape.

## Revendications

1. Borne de raccordement destiné à un accumulateur, comportant une pièce de raccordement à laquelle peut être raccordé un appareil utilisateur, et comportant une pièce d'embase qui a des rainures faisant tout le tour et qui peut être introduite dans un boîtier de l'accumulateur, les rainures faisant tout le tour formant un dispositif d'étanchéité à labyrinthe par de la matière plastique remplissant les rainures, caractérisée en ce qu'au moins une rainure (14; 33) faisant tout le tour a un profil en forme de crochet qui comporte une contre-dépouille (15; 34) en forme de barbe.

2. Borne de raccordement suivant la revendication 1, caractérisée en ce qu'il est prévu au moins une autre rainure comportant deux parties (12, 12) en saillie qui font tout le tour et qui sont formées en section transversale de manière à peu près conique.

3. Borne de raccordement suivant la revendication 2, caractérisée en ce qu'il est formé une rainure (13) de profil en forme de v entre les deux parties (12, 12) en saillie.

4. Borne de raccordement suivant la revendication 1, caractérisée en ce que le profil de la région (16; 23; 35) de bord inférieur, faisant tout le tour, de la pièce (11; 21; 31) d'embase est agencée de manière cunéiforme.

5. Borne de raccordement suivant la revendication 4, caractérisée en ce que le profil de la région (16; 23; 35) de bord est agencé en bord retroussé.

6. Borne de raccordement suivant une des revendications 1 à 5, caractérisée en ce que la pièce (2; 11; 21) d'embase est entourée de matière plastique (4) rétractée.

7. Borne de raccordement suivant l'une des revendications 1 à 6, caractérisée en ce que la matière plastique (4) rétractée est un polymère thermoplastique, par exemple du polypropylène.

8. Borne de raccordement suivant l'une des revendications 1 à 6, caractérisée en ce que la matière plastique (4) rétractée est un matériau thermodurcissable.

9. Borne de raccordement suivant l'une des revendications 1 à 8, caractérisée en ce que la matière plastique (4) rétractée est le matériau plastique du couvercle (5) du boîtier de l'accumulateur.

10. Borne de raccordement suivant l'une des revendications 1 à 8, caractérisée en ce que la matière plastique (4) rétractée est le matériau plastique du boîtier de l'accumulateur.

11. Borne de raccordement suivant l'une des revendications 1 à 4, caractérisée en ce que la région (16; 23; 35) de bord agencée de manière cunéiforme est agencée, par rapport à une surface plane, en partie en saillie cunéiforme, faisant tout le tour et saillant dans le matériau (4) plastique entouré, du côté inférieur de la pièce (11; 21; 31) d'embase.

12. Borne de raccordement suivant l'une des revendications 1 à 11, caractérisée en ce que le corps métallique de la borne, constitué de la pièce (10; 20; 30) de raccordement et de la pièce (11; 21; 31) d'embase a une forme de douille.
